# EUROPÄISCHE PATENTANMELDUNG

(11) **EP 1 562 096 A2**
(43) Veröffentlichungstag der Anmeldung: **10.08.2005**
(21) Anmeldenummer: 05001172.5
(22) Anmeldetag: 21.01.2005
(51) Int. Cl.: G05D 16/10

(54) **Druckminderer**

(30) Priorität: 07.02.2004 DE 102004006158
(71) Anmelder: Judo Wasseraufbereitung GmbH, D-71364 Winnenden (DE)
(72) Erfinder: Stallmann, Peter, 71522 Backnang (DE)
(74) Vertreter: Kohler Schmid Möbus

(57) **Zusammenfassung**

Ein Druckminderer zum Einsatz in Trinkwasser-Hausinstallationen, der ein Gehäuse mit einem Zulauf und einem Auslauf, sowie einen Kolben mit einer Feder umfasst, ist dadurch gekennzeichnet, dass der Kolben mit einem kombinierten Gleit- und Dichtelement versehen ist. Ein derartiger Druckminderer weist einen kostengünstigen Aufbau, eine hohe Funktionssicherheit, sowie eine hohe Lebensdauer auf.

## Beschreibung

Die vorliegende Erfindung betrifft einen Druckminderer zum Einsatz in Trinkwasser-Hausinstallationen, der ein Gehäuse mit einem Zulauf und einem Auslauf, sowie einen Kolben mit einer Feder umfasst

Druckminderer mit Membranen als Dichtelemente sind zahlreich bekannt. So wird beispielsweise in EP 0 233 604 B1 ein Druckregler mit Membran beschrieben. Die in derartigen Druckreglern auftretende Druck- und Durchflussschwankungen belasten jedoch die Membran stark, wodurch die Lebensdauer begrenzt ist. Zudem sind Membranen in der Regel teuer.

DE 94 09 582 U1 beschreibt einen Druckminderer ohne Membranen. Nachteilig ist hier die aufwendige Bauweise und damit verbunden die große Anzahl an notwendigen Dichtungen. Insbesondere erfordert die Dichtstelle, die von einem Schließkörper, einer Abschrägung, einer äußere Schließkante und einem Gummi-Ringventilsitz gebildet wird, hohe Anforderungen an Präzision und Dichtmaterial, um eine Funktionssicherheit zu garantieren.

Aufgabe der vorliegenden Erfindung ist es daher, einen Druckminderer der eingangs genannten Art vorzuschlagen, der einen einfachen und damit kostengünstigen Aufbau sowie eine hohe Funktionssicherheit aufweist und mit dessen Hilfe die eingangs genannten Nachteile vermieden werden können.

Diese Aufgabe wird erfindungsgemäß überraschend einfach dadurch gelöst, dass der Kolben mit einem kombinierten Gleit- und Dichtelement versehen ist. Mit Hilfe dieses Gleit- und Dichtelements ist der Kolben relativ zum Gehäuse beweglich, wobei gleichzeitig eine Abdichtung zwischen Kolben und Gehäuse vorhanden ist.

Die Verwendung eines solchen kombinierten Gleit- und Dichtelementes ermöglicht einen großen Kolbenhub bei konstanter Wirkfläche. Dadurch ist es möglich, einen konstanten Nachdruck innerhalb eines großen Durchflussbereiches zu erzielen, wohingegen die sonst üblichen Membranen je nach Durchfluss und damit verbundenem Kolbenhub verschieden stark gedehnt werden. Mit dem erfindungsgemäßen Druckminderer wird eine Dehnung der Membran und somit eine Änderung der wirksamen Fläche der Membran und damit auch eine Änderung des Nachdrucks vermieden. Demgegenüber ist bei bekannten Druckminderern aufgrund der mechanischen Beanspruchung der Membran mit einer verringerten Lebensdauer zu rechnen.

Bei einer bevorzugten Ausführungsform besteht das kombinierte Gleit- und Dichtelement aus zwei konzentrischen Ringen, die am Koben dicht anliegen. Dichtungsring und Gleitring sind somit einzeln kostengünstig herzustellen.

Bei einer weiteren Variante ist der Dichtungsring fest mit dem Gleitring verbunden. Diese Variante ist zwar in ihrer Herstellung teurer, ermöglicht aber eine einfachere Montage und schließt ein unbeabsichtigtes Verschieben von Dichtungsring und Gleitring zueinander aus.

Besonders vorteilhaft ist die Verwendung von Teflon als Gleitring und ein handelsüblicher O-Ring als Dichtungsring. Durch die hervorragenden Gleiteigenschaften von Teflon und die hohe Elastizität und die dadurch resultierende gute Dichtfunktion eines handelsüblichen, kostengünstigen O-Rings ergibt die Kombination dieser beiden Werkstoffe eine Dichtung mit hervorragenden Gleiteigenschaften.

Bei einer besonders bevorzugten Variante ist der Kolben mit einem Ventilkörper mit integrierter Dichtung verbunden. Bei dieser Ausführungsform schließt das Ventil bei unzulässig hohem Vordruck sicher ab, indem der Ventilkörper mit seiner Dichtung (z.B. O-Ring) dicht gegen den Ventilsitz gepresst wird.

Bei einer technisch besonders einfach realisierbaren Ausführungsform besitzt die Feder eine vorgegebene, nicht verstellbare Federkraft. Die Verwendung einer solchen Feder ist möglich, weil in den häufigsten Fällen nur ein begrenzter, vorgegebener Nachdruck benötigt wird. Bei dieser Ausführungsform kann auf eine Öffnung am Gehäuse für die Aufnahme einer Verstelleinrichtung verzichtet werden. Vorteilhaft bei dieser Variante ist neben der einfachen und damit kostengünstigen Bauweise die Tatsache, dass selbst bei Undichtheiten am Kolben kein Wasser nach außen dringen kann. Dies ist besonders in Räumen wichtig, in denen großer Wasserschaden entstehen kann.

Der erfindungsgemäße Druckminderer kann jedoch auch dergestalt realisiert werden, dass die Kraft der Feder einstellbar ist. In diesem Fall kann der Nachdruck beliebig sein.

Bei einer weiteren Variante ist am Gehäuse ein Ventil zur Leckage- und Funktionskontrolle des Druckminderers vorgesehen. Hier kann von Zeit zu Zeit durch kurzes Öffnen des Ventils kontrolliert werden, ob sich durch eine Undichtheit am Kolben Wasser im Bereich der Feder befindet und die Funktion des Druckminderers gestört ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.
Die Erfindung ist in der Zeichnung dargestellt und wird anhand eines Ausführungsbeispiels näher erläutert.

Es zeigen:
- Abb. 1: einen schematische Vertikalschnitt durch eine Ausführungsform der erfindungsgemäßen Vorrichtung in geschlossener Stellung (kein Durchfluss), und
- Abb. 2: einen schematische Vertikalschnitt durch eine Ausführungsform der erfindungsgemäßen Vorrichtung bei Wasserentnahme.

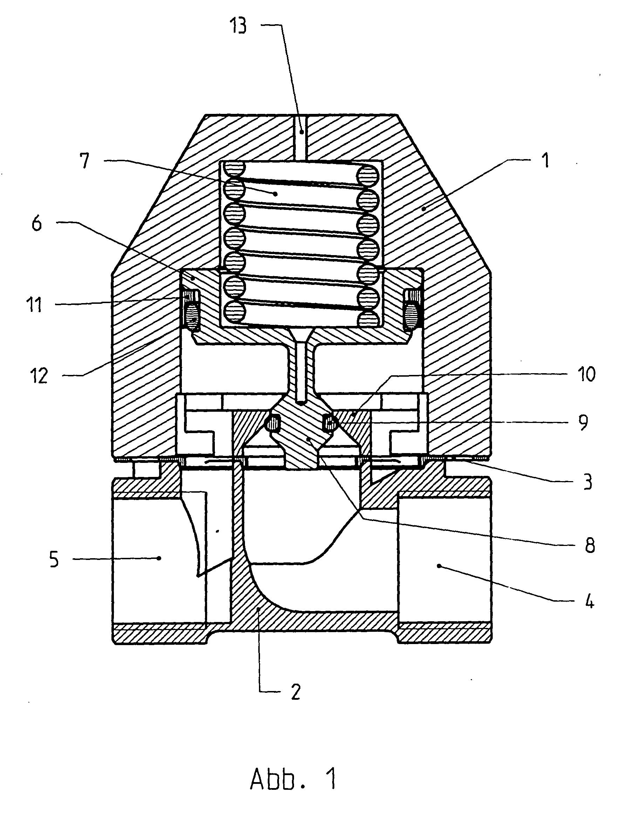

Der Druckminderer besteht aus einem Gehäuseoberteil **1** und einem Anschlussgehäuse **2,** die über eine Flanschdichtung **3** dicht miteinander verbunden sind. Im Anschlussgehäuse **2** befinden sich ein Zulauf **4** und ein Auslauf **5.**
In Phasen, in denen keine Wasserentnahme stattfindet **(Abb. 1),** übersteigt die Kraft, die durch den Druck des Wassers auf die Ringfläche des Kolbens **6** ausgeübt wird, die Kraft der Feder **7.** Der Kolben **6** bewegt sich nach oben und mit ihm der Ventilkörper **8.** Dabei presst sich die Dichtung **9** gegen den Ventilsitz **10.** Das Ventil ist geschlossen.

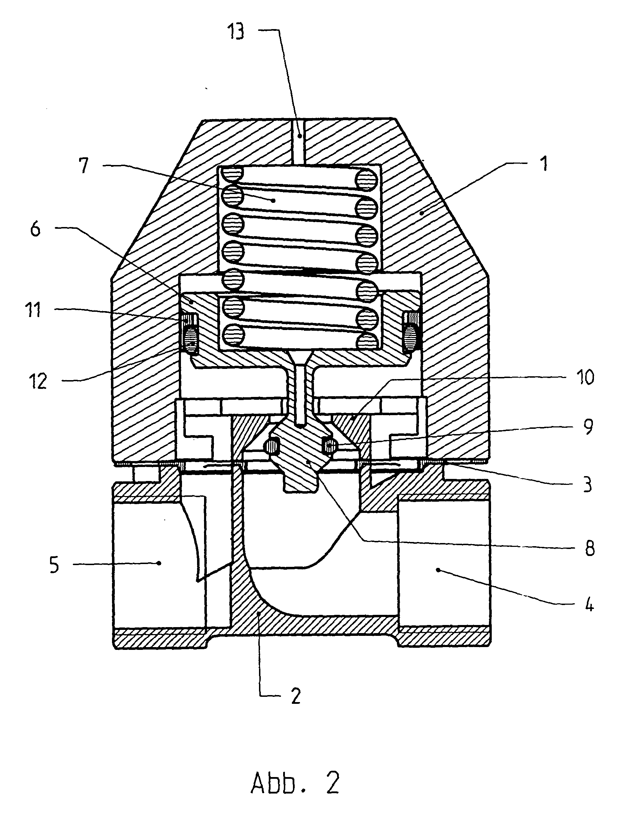

Bei Wasserentnahme **(Abb. 2)** verringert sich der Nachdruck und damit die Kraft, die durch den Nachdruck auf die Ringfläche des Kolbens **6** ausgeübt wird. Der Kolben **6** bewegt sich durch die Kraft der Feder **7** nach unten bis ein Kräftegleichgewicht vorliegt, der Schließkörper **8** wird dabei geöffnet. Das Gleitelement **11** ermöglicht eine reibungsarme Kolbenbewegung relativ zum Gehäuse **1,** das Dichtelement **12** sorgt aufgrund seiner Elastizität dafür, dass der Kolben **6** stets dicht zum Gehäuse **1** schließt. Die Öffnung **13** am Gehäuse **1** kann zur Aufnahme einer Verstelleinrichtung für die Kraft der Feder **7** oder aber zur Leckagekontrolle dienen.

## Patentansprüche

1. Druckminderer zum Einsatz in Trinkwasser-Hausinstallationen, der ein Gehäuse **(1, 2)** mit einem Zulauf **(4)** und einem Auslauf **(5),** sowie einen Kolben **(6)** mit einer Feder **(7)** umfasst,
**dadurch gekennzeichnet,**
**dass** der Kolben **(6)** mit einem kombinierten Gleit- und Dichtelement **(11, 12)** versehen ist.

2. Druckminderer nach Anspruch 1,
**dadurch gekennzeichnet,**
**dass** das kombinierte Gleit- und Dichtelement **(11, 12)** aus zwei dicht am Kolben **(6)** anliegenden konzentrischen Ringen besteht.

3. Druckminderer nach Anspruch 2,
**dadurch gekennzeichnet,**
**dass** der Dichtungsring **(12)** fest mit dem Gleitring **(11)** verbunden ist.

4. Druckminderer nach einem der Ansprüche 2 oder 3,
**dadurch gekennzeichnet,**
**dass** der Gleitring **(11)** aus Teflon besteht und der Dichtungsring **(12)** ein handelsüblicher O-Ring ist.

5. Druckminderer nach einem der vorhergehenden Ansprüche,
**dadurch gekennzeichnet,**
**dass** der Kolben **(6)** mit einem Ventilkörper **(8)** mit integrierter Dichtung **(9)** verbunden ist.

6. Druckminderer nach einem der vorhergehenden Ansprüche,
**dadurch gekennzeichnet,**
**dass** die Feder **(7)** eine vorgegebene, nicht verstellbare Federkraft besitzt.

7. Druckminderer nach einem der Ansprüche 1 bis 5,
**dadurch gekennzeichnet,**
**dass** die Kraft der Feder **(7)** einstellbar ist

8. Druckminderer nach einem der vorhergehenden Ansprüche,
**dadurch gekennzeichnet,**
**dass** am Gehäuse **(1)** ein Ventil **(13)** zur Leckage- und Funktionskontrolle vorgesehen ist.
